# EUROPEAN PATENT SPECIFICATION

(11) **EP 3 819 777 B1**
(45) Date of publication and mention of the grant of the patent: **31.05.2023**
(21) Application number: 18927299.0
(22) Date of filing: 27.07.2018
(51) Int. Cl.: G06F 13/40, H01R 27/00, G06F 13/38

(54) **MOBILE TERMINAL**
MOBILES ENDGERÄT
TERMINAL MOBILE

(43) Date of publication of application: 12.05.2021
(73) Proprietor: HUAWEI TECHNOLOGIES CO., LTD., Shenzhen, Guangdong 518129 (CN)
(72) Inventor: LI, Tao, Shenzhen, Guangdong 518129 (CN)
(74) Representative: Thun, Clemens
(86) International application number: PCT/CN2018/097622
(87) International publication number: WO 2020/019332

(56) References cited:
- CN-A- 108 206 444
- CN-A- 108 228 509
- CN-U- 203 643 893
- JP-B1- 6 021 208
- US-A1- 2013 162 198
- US-A1- 2017 005 494

## Description

### TECHNICAL FIELD

This application relates to the field of communications technologies, and in particular, to a mobile terminal.

### BACKGROUND

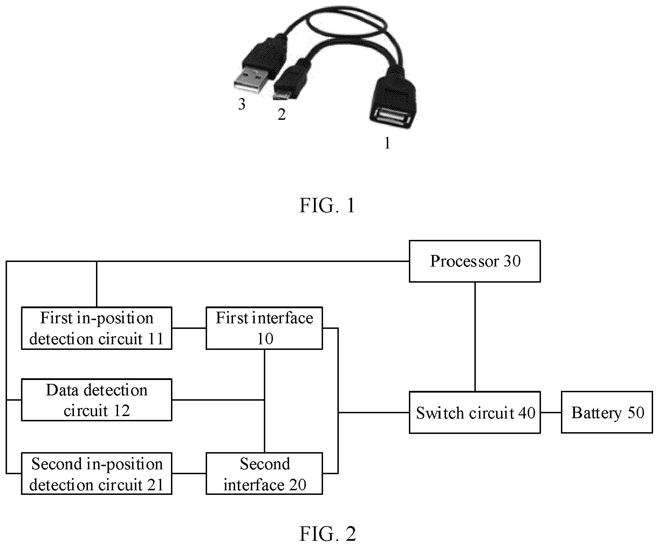

Currently, as mobile terminals have been used more and more widely, people are inseparable from the mobile terminals, whether for life or for work. Therefore, there are more and more application scenarios in which a mobile terminal needs to be connected to a peripheral device for data transmission while being charged. For example, in an application scenario of a student user, a mobile terminal is downloading homework while being charged. In an application scenario of a conference system, a mobile terminal is being used while being charged, or a mobile terminal is connected to a USB flash drive, a printer, and the like while being charged. To resolve a problem that a mobile terminal performs data transmission while being charged, a Y-shaped cable shown in FIG. 1 is introduced to the market. In FIG. 1, 1 is a type A female connector and is used to connect to a peripheral device, 2 is a micro B male connector and is used to connect to a mobile terminal, and 3 is a type A male connector and is used to connect to a power adapter. In this case, the power adapter and the peripheral device may be simultaneously connected to the mobile terminal, so that the mobile terminal can support data transmission while being charged. However, the Y-shaped cable has a safety problem for the following reason: After the interface 2 of the Y-shaped cable is inserted into the mobile terminal, the mobile terminal detects that a USB_ID port is grounded and controls a battery to reversely supply power to a VBUS of the interface 2 of the Y-shaped cable, and a charger of the mobile terminal enters a BOOST mode (the mobile terminal supplies power outward); then after the interface 3 of the Y-shaped cable is inserted into the adapter, the charger of the mobile terminal enters a BUCK mode (the adapter supplies power to the mobile terminal). When the charger of the terminal is in the BOOST mode and the BUCK mode at the same time, the charger may become abnormal, which may cause overcharge of the battery, and further damage the battery of the mobile terminal. Due to the safety problem of the Y-shaped cable, the Y-shaped cable is not widely used in mobile terminal products currently, such as mobile phones or tablets. How to safely support both charging and data transmission in a mobile terminal is an urgent problem to be resolved.

US 2013/0162198A1 describes an information processing apparatus, which is capable of charging batteries of a plurality of portable devices, includes ports, a current detector and a power supply controller. The plurality of portable devices are detachably attached to the ports and the current detector detects a current drawn to each of the plurality of portable devices when the plurality of portable devices are attached to the ports. The power supply controller prevents a current of a first threshold or more from being drawn to a first portable device other than a predetermined number of portable devices among the plurality of portable devices, when the current drawn to each of the predetermined number of portable devices is the first threshold or more.

### SUMMARY

According to a first aspect, an embodiment of the present invention provides a mobile terminal, where the mobile terminal includes a first interface, a second interface, a first in-position detection circuit, a second in-position detection circuit, a data detection circuit, a processor, a switch circuit, and a battery. The first interface is electrically connected to the first in-position detection circuit, the second interface is electrically connected to the second in-position detection circuit, and the data detection circuit is electrically connected to the first interface and the second interface. The first in-position detection circuit, the second in-position detection circuit, and the data detection circuit are further electrically connected to the processor, the processor is further electrically connected to the switch circuit, and the switch circuit is further electrically connected to the first interface, the second interface, and the battery. The first interface and the second interface are configured to connect to a peripheral device. The first in-position detection circuit and the second in-position detection circuit are configured to detect whether the peripheral device is connected to the mobile terminal. The data detection circuit is configured to detect whether the peripheral device exchanges data with the mobile terminal. The processor is configured to control the switch circuit based on detection results of the first in-position detection circuit, the second in-position detection circuit, and the data detection circuit. The switch circuit is configured to control the first interface and the second interface to be separately conducted to the battery or the processor.

Therefore, according to the mobile terminal provided in the embodiment of this application, an interface is added to the mobile terminal, a switch circuit is added to the mobile terminal, and a charging path and a data transmission path are adjusted based on a switch status of the switch circuit. In this way, the mobile terminal can simultaneously support charging and data transmission while ensuring safety, which resolves a problem that charging and data transmission cannot be performed safely at the same time in the mobile terminal.

According to the mobile terminal provided in the embodiment of this application, the switch circuit includes a first switch, a second switch, a third switch, and a data channel switch. A first end of the first switch is electrically connected to a power port of the first interface, a second end of the first switch is electrically connected to the battery, and a control end of the first switch is electrically connected to a first output end of the processor. A first end of the second switch is electrically connected to a power port of the second interface, a second end of the second switch is electrically connected to the battery, and a control end of the second switch is electrically connected to a second output end of the processor. A first end of the third switch is electrically connected to the power port of the first interface, a second end of the third switch is electrically connected to the power port of the second interface, and a control end of the third switch is electrically connected to a third output end of the processor. A control end of the data channel switch is electrically connected to a fourth output end of the processor, a first end of the data channel switch is electrically connected to a data end of the first interface, a second end of the data channel switch is electrically connected to a data end of the second interface, and a third end of the data channel switch is electrically connected to a data port of the processor.

Therefore, because the switch circuit that includes four switches is part of the mobile terminal, the processor can flexibly control the switch circuit, so that the first interface and the second interface are separately conducted to the battery or the processor. In this way, the mobile terminal can simultaneously support charging and data transmission while ensuring safety, which resolves the problem that charging and data transmission cannot be performed safely at the same time in the mobile terminal.

In a specific embodiment, the peripheral device includes a power adapter or an OTG device. If the power adapter is connected to the first interface, and the OTG device is connected to the second interface, the processor is specifically configured to control the first switch to be closed, the second switch to be open, and the third switch to be closed, so that the second end and the third end of the data channel switch are conducted; or control the first switch to be closed, the second switch to be closed, and the third switch to be open, so that the second end and the third end of the data channel switch are conducted.

In a specific embodiment, the peripheral device includes a power adapter or an OTG device. If the power adapter is connected to the second interface, and the OTG device is connected to the first interface, the processor is specifically configured to control the first switch to be closed, the second switch to be closed, and the third switch to be open, so that the first end and the third end of the data channel switch are conducted; or the processor is specifically configured to control the first switch to be closed, the second switch to be open, and the third switch to be closed, so that the first end and the third end of the data channel switch are conducted.

In a specific embodiment, the peripheral device includes a power adapter or a personal computer. If the power adapter is first connected to the first interface, and then the personal computer is connected to the second interface, the processor is specifically configured to control the first switch to be closed, and the second switch and the third switch to be open, so that the second end and the third end of the data channel switch are conducted. Alternatively, if the personal computer is first connected to the second interface, and then the power adapter is connected to the first interface, the processor is specifically configured to control the first switch to be open, the second switch to be closed, and the third switch to be open, so that the second end and the third end of the data channel switch are conducted.

In a specific embodiment, the peripheral device includes a power adapter or a personal computer. If the power adapter is first connected to the second interface, and then the personal computer is connected to the first interface, the processor is specifically configured to control the first switch to be open, the second switch to be closed, and the third switch to be open, so that the first end and the third end of the data channel switch are conducted. Alternatively, if the personal computer is first connected to the first interface, and then the power adapter is connected to the second interface, the processor is specifically configured to control the first switch to be closed, and the second switch and the third switch to be open, so that the first end and the third end of the data channel switch are conducted.

The foregoing combinations of various switch statuses can enable the mobile terminal to simultaneously support charging and data transmission in different situations, thereby resolving the problem that charging and data transmission cannot be performed safely at the same time in the mobile terminal.

In a specific embodiment, the mobile terminal further includes a memory, where the memory is configured to store a correspondence between switch statuses of the switch circuit and detection results of the first in-position detection circuit, the second in-position detection circuit, and the data detection circuit.

In a specific embodiment, the processor is specifically configured to control the switch statuses of the switch circuit based on the correspondence and the detection results of the first in-position detection circuit, the second in-position detection circuit, and the data detection circuit.

By storing the correspondence in the memory, the processor can learn of the switch statuses of the switch circuit by querying the correspondence based on the detection results, thereby simply completing control of the switch circuit, and resolving the problem that charging and data transmission cannot be performed safely at the same time in the mobile terminal.

In a specific embodiment, the first interface and the second interface include a same port. Therefore, the two interfaces may be randomly used, that is, charging and data transmission can be completed by using either of the interfaces.

In a specific embodiment, the first interface and the second interface include a VBUS, a D+, a D-, a USB_ID, and the ground.

In a specific embodiment, the first interface or the second interface is a USB micro B interface.

In a specific embodiment, the first interface or the second interface is a POGO PIN interface.

In a specific embodiment, the mobile terminal further includes a base, where the base is connected to the POGO PIN interface and converts the POGO PIN interface into a USB micro B interface. Therefore, by using the base, the mobile terminal is enabled to support a USB micro B interface and meet a connection requirement of a peripheral device that has a USB micro B interface.

In a specific embodiment, the mobile terminal further includes a base, where the base is connected to the POGO PIN interface and converts the POGO PIN interface into a type A interface. Therefore, by using the base, the mobile terminal is enabled to support a type A interface and meet a connection requirement of a peripheral device that has a type A interface.

Therefore, by using the base, the mobile terminal is enabled to support different and more diversified interface types and meet connection requirements of peripheral devices that have different interfaces.

In a specific embodiment, if the peripheral device is removed from the first interface or the second interface, the processor is specifically configured to control the switch, which has been controlled to be closed when the peripheral device is inserted, to be open. In this way, the first interface or the second interface of the mobile terminal is enabled to disconnect from the battery in time, thereby improving safety of the mobile terminal.

In a specific embodiment, if the power adapter is removed from the first interface, the processor is specifically configured to control the first switch that is closed to be open. In this way, a path between the first interface and the battery is disconnected, which ensures that no current flows through the first interface, thereby improving safety of the mobile terminal.

In a specific embodiment, if the OTG device is removed from the second interface, the processor is specifically configured to control the second switch that is closed to be open, or control the third switch that is closed to be open. In this way, a path between the second interface and the battery is disconnected, which ensures that no current flows through the second interface, thereby improving safety of the mobile terminal.

### BRIEF DESCRIPTION OF DRAWINGS

FIG. 1 shows a Y-shaped cable in the prior art;
FIG. 2 is a structural block diagram of a mobile terminal according to an embodiment of this application;
FIG. 3A is a detailed circuit diagram (POGO PIN interface) of a mobile terminal according to an embodiment of this application;
FIG. 3B is another detailed circuit diagram (Micro B interface) of a mobile terminal according to an embodiment of this application;
FIG. 3C is still another detailed circuit diagram (with a base) of a mobile terminal according to an embodiment of this application;
FIG. 4A is a detailed circuit diagram (a first interface is connected to a power adapter and a second interface is connected to an OTG device) of a scenario 1 of a mobile terminal according to an embodiment of this application;
FIG. 4B is another detailed circuit diagram (a first interface is connected to a power adapter and a second interface is connected to an OTG device) of the scenario 1 of a mobile terminal according to an embodiment of this application;
FIG. 5A is a detailed circuit diagram (a second interface is connected to a power adapter and a first interface is connected to an OTG device) of a scenario 2 of a mobile terminal according to an embodiment of this application;
FIG. 5B is another detailed circuit diagram (a second interface is connected to a power adapter and a first interface is connected to an OTG device) of the scenario 2 of a mobile terminal according to an embodiment of this application;
FIG. 6A is a detailed circuit diagram (a first interface is connected to a power adapter and a second interface is connected to a personal computer) of a scenario 3 of a mobile terminal according to an embodiment of this application;
FIG. 6B is another detailed circuit diagram (a first interface is connected to a power adapter and a second interface is connected to a personal computer) of the scenario 3 of a mobile terminal according to an embodiment of this application;
FIG. 7A is a detailed circuit diagram (a second interface is connected to a power adapter and a first interface is connected to a personal computer) of a scenario 4 of a mobile terminal according to an embodiment of this application;
FIG. 7B is another detailed circuit diagram (a second interface is connected to a power adapter and a first interface is connected to a personal computer) of the scenario 4 of a mobile terminal according to an embodiment of this application;
FIG. 8A is a detailed circuit diagram (only a first interface is connected to an OTG device) of a scenario 5 of a mobile terminal according to an embodiment of this application; and
FIG. 8B is another detailed circuit diagram (only a second interface is connected to an OTG device) of the scenario 5 of a mobile terminal according to an embodiment of this application.

### DESCRIPTION OF EMBODIMENTS

The following clearly describes the technical solutions in the embodiments of the present invention with reference to the accompanying drawings in the embodiments of the present invention.

The terms used in the embodiments of the present invention are merely for the purpose of illustrating specific embodiments, and are not intended to limit the present invention. The terms "a", "said" and "the" of singular forms used in the embodiments and the appended claims of the present invention are also intended to include plural forms, unless otherwise specified in the context clearly. It should also be understood that, the term "and/or" used herein indicates and includes any or all possible combinations of one or more associated listed items. It should be further understood that the term "include" adopted in the specification specifies presence of features, integers, steps, operations, elements and/or components, with presence or attachment of other features, integers, steps, operations, components, elements, and their combinations not excluded.

It may be understood that although terms "first" and "second" may be used to describe interfaces and terms "first", "second", and "third" may be used to describe switches in the embodiments of the present invention, these interfaces and switches should not be limited to these terms. These terms are only used to distinguish different interfaces from each other, and to distinguish different switches from each other. For example, without departing from the scope of the embodiments of the present invention, a first interface may also be referred to as a second interface, and similarly, a second interface may also be referred to as a first interface; a first switch may be referred to as a second switch, and similarly, a second switch may be referred to as a first switch. Details are not described herein.

FIG. 2 is a structural block diagram of a mobile terminal according to an embodiment of this application. The mobile terminal includes a first interface 10, a second interface 20, a first in-position detection circuit 11, a second in-position detection circuit 21, a data detection circuit 12, a processor 30, a switch circuit 40, and a battery 50. The first interface 10 is electrically connected to the first in-position detection circuit 11, the second interface 20 is electrically connected to the second in-position detection circuit 21, and the data detection circuit 12 is electrically connected to the first interface 10 and the second interface 20. The first in-position detection circuit 11, the second in-position detection circuit 21, and the data detection circuit 12 are further electrically connected to the processor 30, the processor 30 is further electrically connected to the switch circuit 40, and the switch circuit 40 is further electrically connected to the first interface 10, the second interface 20, and the battery 50. The first interface 10 and the second interface 20 are configured to connect to a peripheral device. The first in-position detection circuit 11 and the second in-position detection circuit 21 are configured to detect whether the peripheral device is connected to the mobile terminal. The data detection circuit 12 is configured to detect whether the peripheral device exchanges data with the mobile terminal. The processor 30 is configured to control the switch circuit 40 based on detection results of the first in-position detection circuit 11, the second in-position detection circuit 21, and the data detection circuit 12. The switch circuit 40 is configured to enable the first interface 10 and the second interface 20 to be separately conducted to the battery 50 or the processor 40.

It should be noted that the first interface 10 and the second interface 20 are configured to connect to a peripheral device. The peripheral device is a device that charges the mobile terminal or exchanges data with the mobile terminal, and may include a charger, an OTG (On-To-Go) device, a personal computer, and the like. The OTG device may be a device that exchanges data with the mobile terminal and needs to be powered by the mobile terminal, for example, a USB flash drive, a printer, or a camera. The first interface 10 and the second interface 20 include a same port. Therefore, the first interface 10 and the second interface 20 have a same role or function in the mobile terminal. For example, the first interface 10 and the second interface 20 include a VBUS, a D+, a D-, a USB_ID, and the ground. To be specific, both the first interface 10 and the second interface 20 support charging and data transmission, and a user may randomly use either of the two interfaces to perform charging or data transmission. If charging and data transmission need to be performed simultaneously in the mobile terminal, the two interfaces may be used at the same time. A difference between the first interface 10 and the second interface 20 is that the first interface 10 and the second interface 20 may have different physical appearances and may be in different locations in the mobile terminal. A specific type of physical appearance of the interface to be used and a location in the mobile terminal need to be determined according to an actual product design requirement. This is not specifically limited in this embodiment of the present invention. For example, the first interface 10 is a USB micro B interface, and the second interface 20 is a POGO PIN interface; or the first interface 10 is a USB micro B interface, and the second interface 20 is a USB micro B interface. The first interface 10 and the second interface 20 are located on different sides of the mobile terminal, and the first interface 10 and the second interface 20 may also be located on a same side of the mobile terminal.

It should be noted that the switch circuit 40 is configured to enable the first interface 10 and the second interface 20 to be separately conducted to the battery 50 or the processor 40. Specifically, the first interface is conducted to the battery, and the second interface is conducted to the processor; or the first interface is conducted to the processor, and the second interface is conducted to the battery, so that the mobile terminal can simultaneously support charging and data transmission.

According to the mobile terminal provided in this embodiment of the present invention, an interface is added to the mobile terminal, a switch circuit is added to the mobile terminal, and a charging path and a data transmission path are adjusted based on a switch status of the switch circuit. In this way, the mobile terminal can simultaneously support charging and data transmission while ensuring safety, which resolves a problem that charging and data transmission cannot be performed safely at the same time in the mobile terminal.

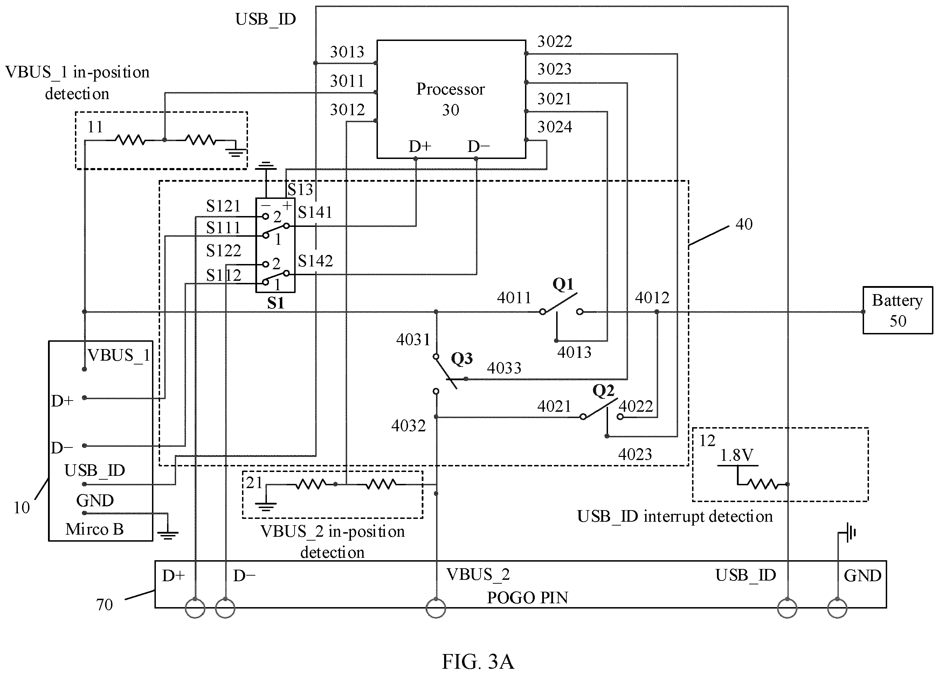

FIG. 3 A is a detailed circuit diagram of a mobile terminal according to an embodiment of this application. The following provides detailed description by using an example in which the first interface 10 is a USB micro B and the second interface 20 is a POGO PIN interface. For a part that is the same as that in FIG. 1, refer to the description of FIG. 1. Only a part different from that in FIG. 1 is described in this embodiment of this application.

As shown in FIG. 3A: A VBUS_1 of the first interface 10 is electrically connected to the first in-position detection circuit 11. A VBUS_2 of the second interface 20 is electrically connected to the second in-position detection circuit 21. The data detection circuit 12 is electrically connected to a USB_ID of the first interface 10 and a USB_ID of the second interface 20. The first in-position detection circuit 11 is electrically connected to a first input end 3011 of the processor 30. The second in-position detection circuit 21 is electrically connected to a first input end 3012 of the processor 30. The data detection circuit 12 is electrically connected to a third input end 3013 of the processor 30.

The switch circuit 40 includes a first switch Q1, a second switch Q2, a third switch Q3, and a data channel switch S1.

A first end 4011 of the first switch Q1 is electrically connected to the power port VBUS_1 of the first interface 10, a second end 4012 of the first switch Q1 is electrically connected to the battery 50, and a control end 4013 of the first switch Q1 is electrically connected to a first output end 3021 of the processor 30.

A first end 4021 of the second switch Q2 is electrically connected to the power port VBUS_2 of the second interface 20, a second end 4022 of the second switch Q2 is electrically connected to the battery 50, and a control end 4023 of the second switch Q2 is electrically connected to a second output end 3022 of the processor 30.

A first end 4031 of the third switch Q3 is electrically connected to the power port VBUS_1 of the first interface 10, a second end 4032 of the third switch Q3 is electrically connected to the power port VBUS_2 of the second interface 20, and a control end 4033 of the third switch Q3 is electrically connected to a third output end 3023 of the processor 30.

A control end S13 of the data channel switch S1 is electrically connected to a fourth output end 3024 of the processor 30. The data channel switch S1 includes a first end, a second end, and a third end, where the first end (S111, S112) of the data channel switch S1 is electrically connected to a data end (D+, D-) of the first interface, the second end (S121, S122) of the data channel switch S1 is electrically connected to a data end (D+, D-) of the second interface, and the third end (S141, S142) of the data channel switch S1 is electrically connected to a data port (D+, D-) of the processor. To be specific, the S111 is electrically connected to the D+ of the first interface 10, the S112 is electrically connected to the D- of the first interface 10, the S121 is electrically connected to the D+ of the second interface 20, the S122 is electrically connected to the D- of the second interface 20, the S141 is electrically connected to the D+ of the processor 30, and the S142 is electrically connected to the D- of the processor 30.

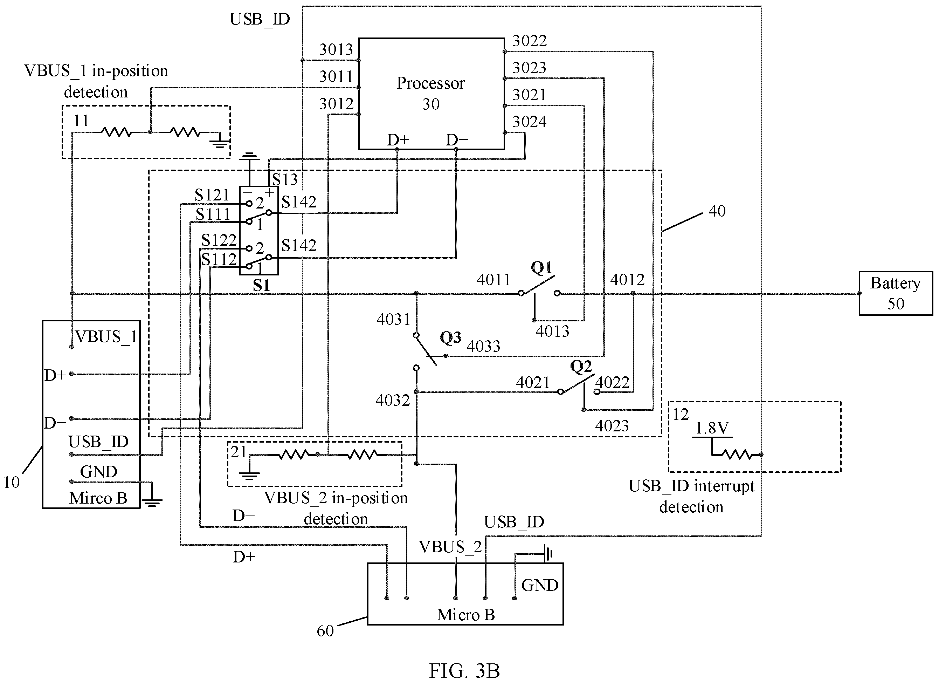

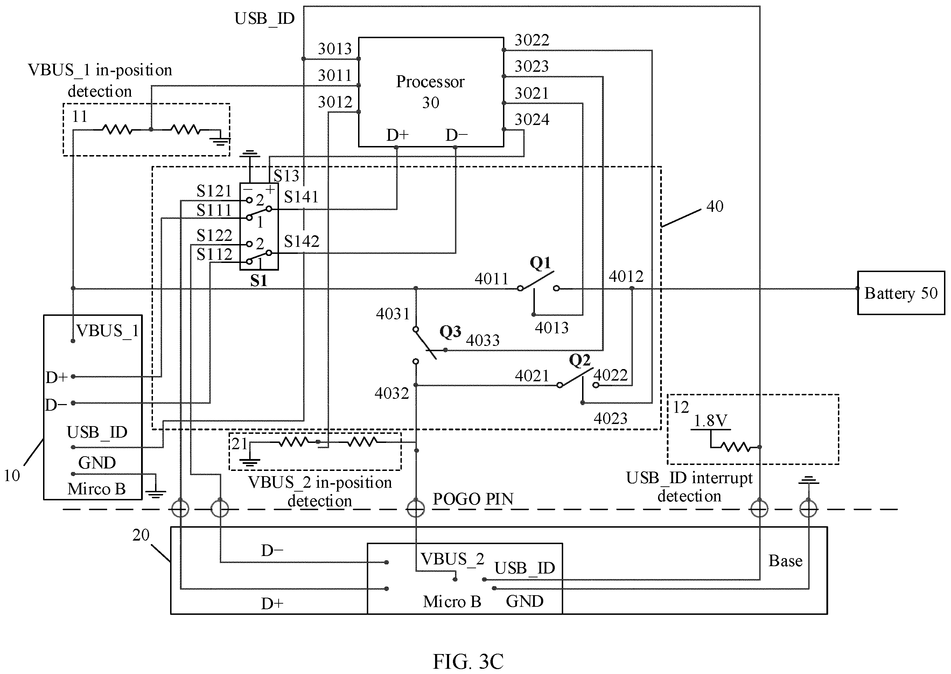

It should be noted that the first in-position detection circuit and the second in-position detection circuit use a detection circuit and a detection method in the prior art, and details are not described herein. The data detection circuit is configured to detect whether the peripheral device exchanges data with the mobile terminal. For example, the data detection circuit may be a USB_ID in-position detection circuit. As shown in FIG. 3, initially, the data channel switch S1 conducts the first interface 10 and the processor 30 by default (in the S1, the S111 port and the S141 port are conducted, and the S112 port and the S142 port are conducted). The USB_ID port of the first interface 10 and the USB_ID port of the second interface 20 are connected, and are electrically connected to the USB_ID in-position detection circuit. Regardless of which interface is connected to an OTG device, the USB_ID port is pulled down to trigger an interrupt. The processor identifies the USB device by using the data port (D+, D-). If no data is transmitted through the interface, a switch status of the S1 is switched (in the S1, the S121 port and the S141 port are conducted, and the S122 port and the S142 port are conducted), to conduct a data path between the processor and the other interface. If data is transmitted, the switch status of the S1 remains unchanged (in the S1, the S111 port and the S141 port of the S1 keep being conducted, and the S112 port and the S142 port of the S1 keep being conducted). That is, a data path between the processor and a current interface remains, so as to perform normal data transmission. A default status of the S1 may be set based on types of the first interface 10 and the second interface 20. For security, the micro B interface and the processor are preferably conducted by default. If both interfaces are micro B interfaces, one of the interfaces may be randomly selected.

As shown in FIG. 3A, the first interface 10 may be a USB micro B interface, and the second interface may be a POGO PIN interface; as shown in FIG. 3B, both the first interface 10 and the second interface may be USB micro B interfaces; or as shown in FIG. 3C, a base is used as an adapter to convert the POGO PIN interface in FIG. 3 A into a micro B interface. The mobile terminal may also be connected to the POGO PIN interface by using the base, and convert the POGO PIN interface into a type A interface, which is not shown in the figure. When the two interfaces of the mobile terminal are unable to meet a connection requirement of a peripheral device, a converter such as a base may be configured for the mobile terminal, to convert the interfaces of the mobile terminal into required interfaces, so as to meet requirements for different interfaces.

As shown in FIG. 3A, five ports of the first interface 10 and the second interface 20 separately are a VBUS, a D+, a D-, a USB_ID, and the ground. The second interface 20 is a POGO PIN interface. Because a peripheral device does not need to use a cable when connecting to the second interface, the peripheral device may directly connect to the second interface of the mobile terminal by using the POGO PIN interface. For example, the mobile terminal is a body part of a two-in-one notebook computer, and the body part may be connected to a keyboard by using the POGO PIN interface. Therefore, it is convenient for a user to use the mobile terminal. If the mobile terminal further needs to support a USB micro B interface, the Pogo Pin interface may be converted into the USB micro B interface by using a base, where the base may play a supporting role for the mobile terminal.

The peripheral device includes a power adapter, an OTG device, a personal computer, and the like. The following separately describes how the switch circuit in this embodiment of the present invention works in several cases in which the peripheral devices are inserted into the first interface and the second interface of the mobile terminal.

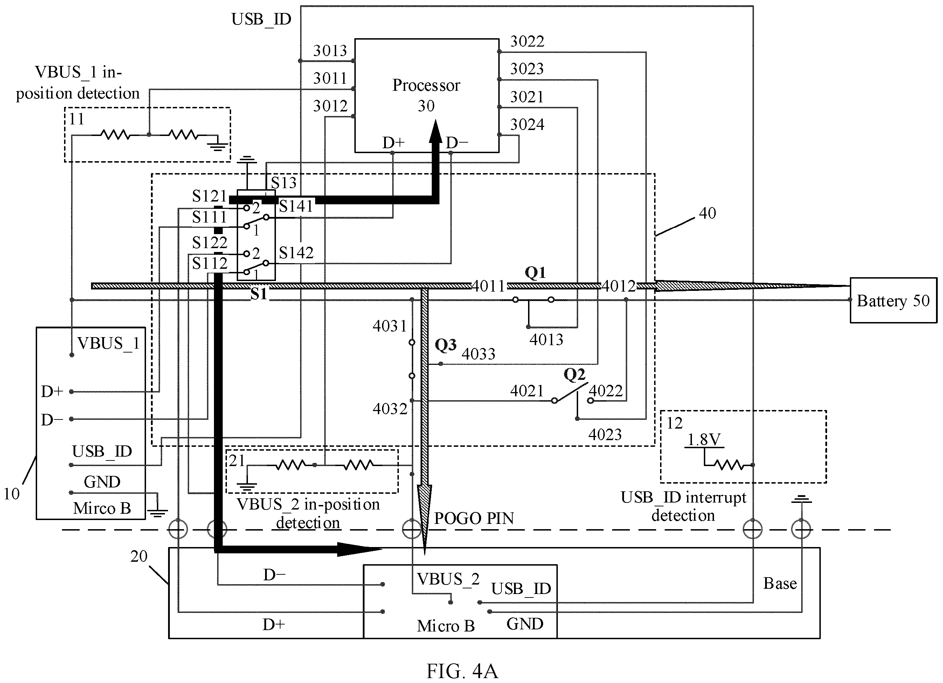

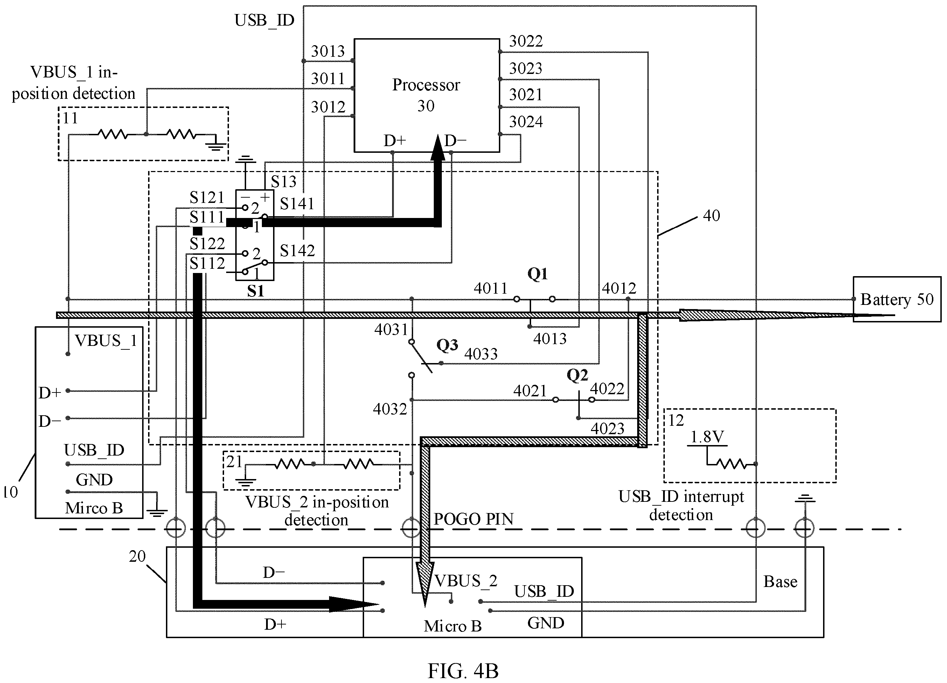

FIG. 4A and FIG. 4B are detailed circuit diagrams of a scenario 1 of a mobile terminal according to an embodiment of this application. The power adapter is connected to the first interface, and the OTG device is connected to the second interface. Therefore, a detection result of the first in-position detection circuit is in-position, a detection result of the second in-position detection circuit is not in-position, and a detection result of the data detection circuit is in-position. The processor is specifically configured to control the first switch to be closed, the second switch to be open, and the third switch to be closed, so that the second end and the third end of the data channel switch are conducted, where in FIG. 4A, a path represented by an arrow with diagonal lines is a charging current path, and a path represented by a black arrow is a data transmission path; or control the first switch to be closed, the second switch to be closed, and the third switch to be open, so that the second end and the third end of the data channel switch are conducted, where in FIG. 4B, a path represented by an arrow with diagonal lines is a charging current path, and path represented by black arrow is a data transmission path.

It should be noted that, in a connection manner of the peripheral devices in FIG. 4A and FIG. 4B, when the power adapter is removed, the processor is specifically configured to control the first switch to be open. In the case shown in FIG. 4B, after the first switch is controlled to be open, the mobile terminal may continue charging the OTG device without being affected. When the OTG device is removed, in the case shown in FIG. 4A, the processor is specifically configured to control the third switch to be open, and in the case shown in FIG. 4B, the processor is specifically configured to control the second switch to be open.

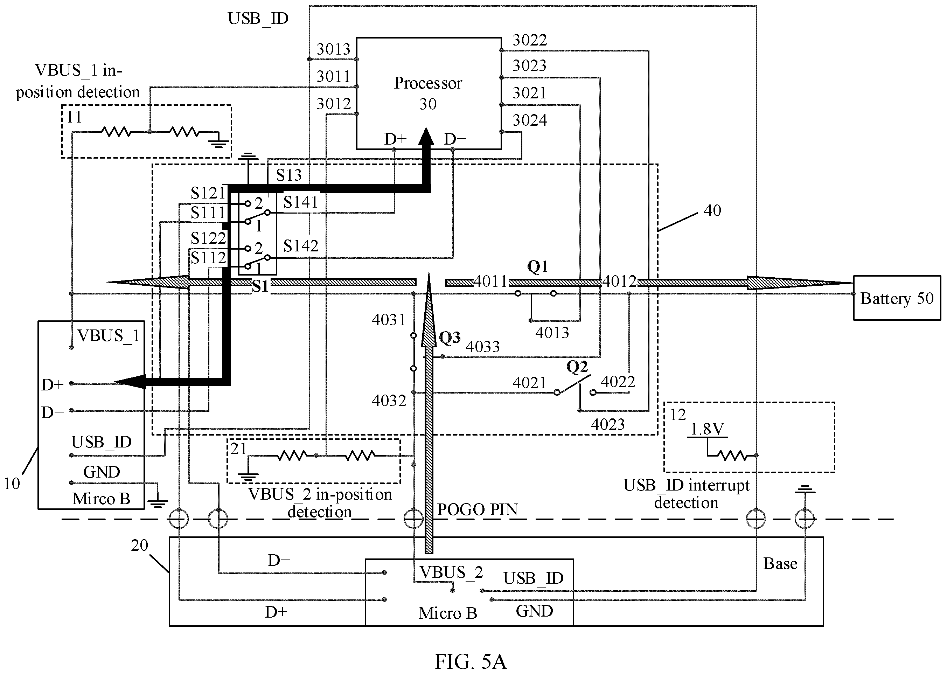

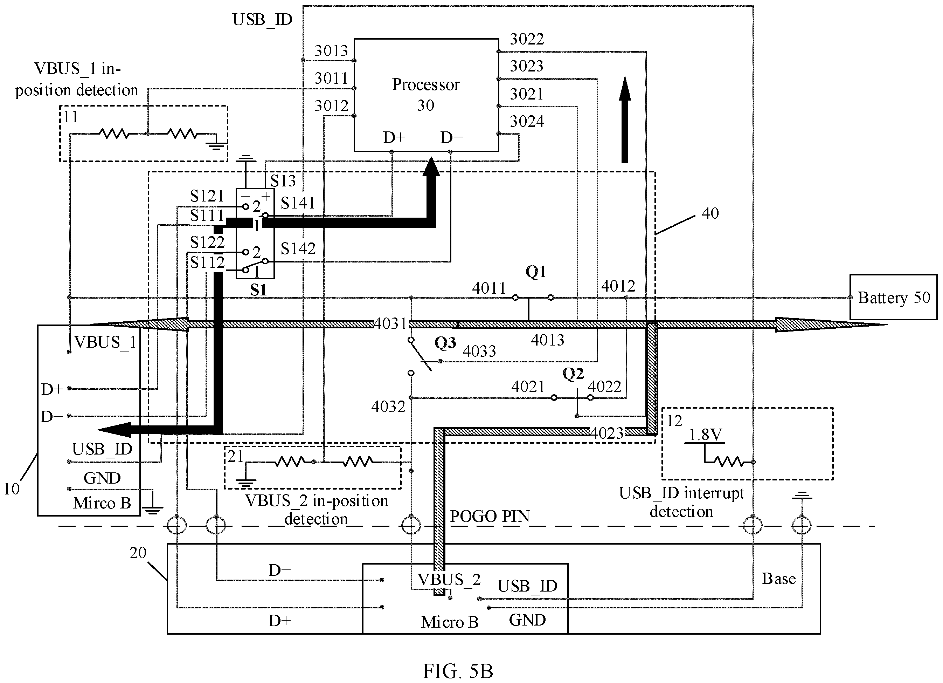

FIG. 5A and FIG. 5B are detailed circuit diagrams of a scenario 2 of a mobile terminal according to an embodiment of this application. The power adapter is connected to the second interface, and the OTG device is connected to the first interface. Therefore, a detection result of the first in-position detection circuit is not in-position, a detection result of the second in-position detection circuit is in-position, and a detection result of the data detection circuit is in-position. The processor is specifically configured to control the first switch to be closed, the second switch to be closed, and the third switch to be open, so that the first end and the third end of the data channel switch are conducted, where in FIG. 5A, a path represented by an arrow with diagonal lines is a charging current path, and a path represented by a black arrow is a data transmission path. Alternatively, the processor is specifically configured to control the first switch to be closed, the second switch to be open, and the third switch to be closed, so that the first end and the third end of the data channel switch are conducted, where in FIG. 5B, a path represented by an arrow with diagonal lines is a charging current path, and a path represented by a black arrow is a data transmission path.

It should be noted that, in a connection manner of the peripheral devices in FIG. 5A and FIG. 5B, when the power adapter is removed, the processor is specifically configured to control the third switch to be open in the case shown in FIG. 5A, and the processor is specifically configured to control the second switch to be open in the case shown in FIG. 5B. When the OTG device is removed, the processor does not need to perform processing in the case shown in FIG. 5A, and the processor is specifically configured to control the first switch to be open in the case shown in FIG. 5B.

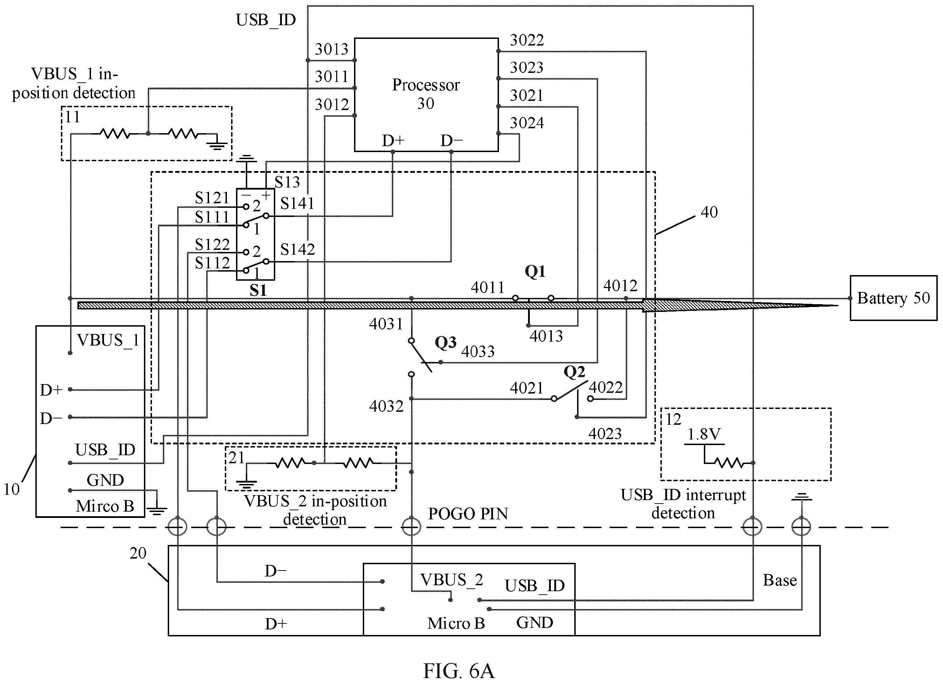

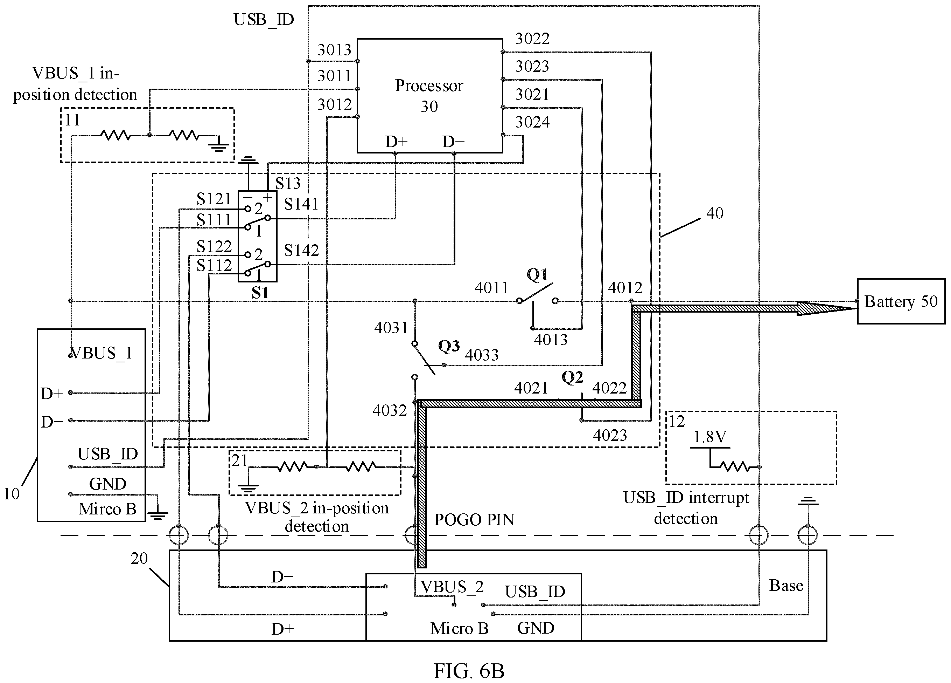

FIG. 6A and FIG. 6B are detailed circuit diagrams of a scenario 3 of a mobile terminal according to an embodiment of this application. Both a power adapter and a personal computer may charge the mobile terminal. Therefore, both detection results of the first in-position detection circuit and the second in-position detection circuit are in-position. If both the power adapter and the personal computer charge the mobile terminal, a conflict occurs. Therefore, the processor preferably uses the peripheral device that is first connected to the mobile terminal, to charge the mobile terminal. In addition, no USB_ID port exists in an interface through which the personal computer connects to the mobile terminal, and therefore a detection result of the data detection circuit is not in-position. However, in this case, the personal computer is a Host, and may directly exchange data with the mobile terminal. Therefore, if the personal computer is connected to a port that is conducted by default, data transmission may be performed between the personal computer and the mobile terminal. If the personal computer is connected to a port that is not conducted by default, data transmission cannot be performed between the personal computer and the mobile terminal.

If the power adapter is first connected to the first interface, and then the personal computer is connected to the second interface (interface that is not conducted by default), the processor is specifically configured to control the first switch to be closed, and the second switch and the third switch to be open. In FIG. 6A, a path represented by an arrow with diagonal lines is a charging current path. The personal computer is connected to the second interface that is not conducted by default, and data transmission cannot be performed between the personal computer and the mobile terminal. Therefore, there is no data transmission path identified by a path represented by a black arrow. That is, only the adapter performs charging, and data transmission is not performed. Alternatively,

If the personal computer is first connected to the second interface (interface that is not conducted by default), and then the power adapter is connected to the first interface, the processor is specifically configured to control the first switch to be open, the second switch to be closed, and the third switch to be open. In FIG. 6B, a path represented by an arrow with diagonal lines is a charging current path. The personal computer is connected to the second interface that is not conducted by default, and data transmission cannot be performed between the personal computer and the mobile terminal. Therefore, there is no data transmission path identified by a path represented by a black arrow. That is, only the personal computer performs charging, and data transmission is not performed.

It should be noted that, in a connection manner of the peripheral devices in FIG. 6A and FIG. 6B, when the power adapter is removed, the processor is specifically configured to control the first switch to be open in the case shown in FIG. 6A, and the processor is specifically configured to control the second switch to be open in the case shown in FIG. 6B.

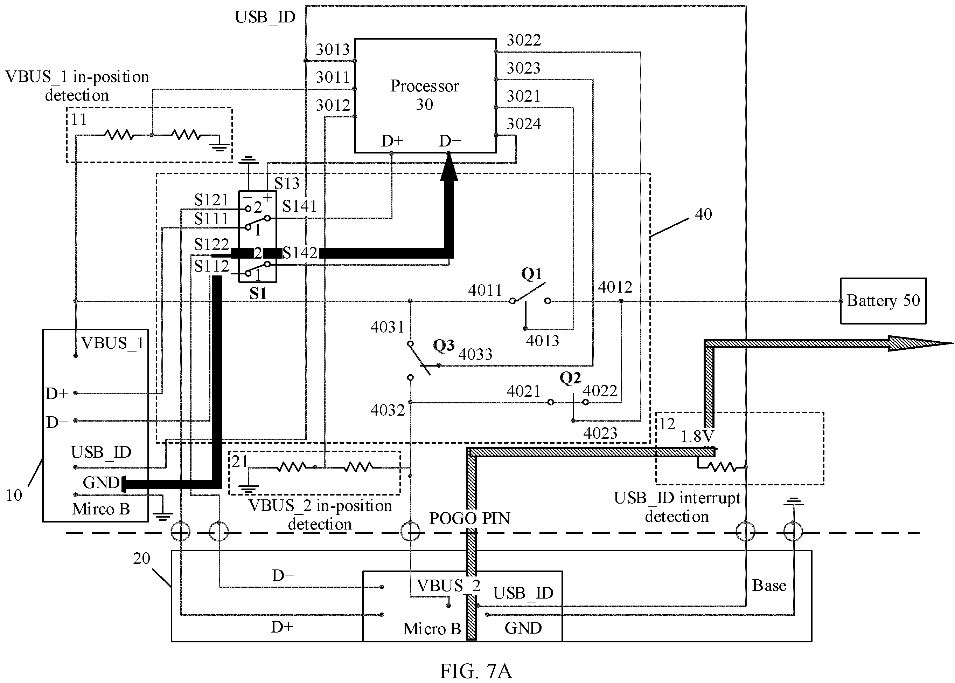

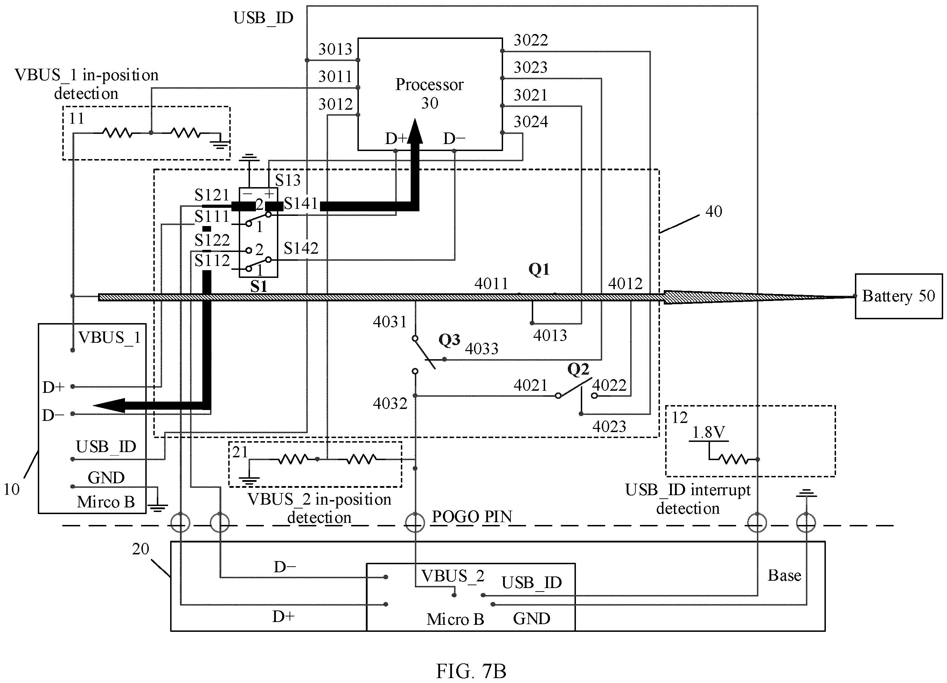

FIG. 7A and FIG. 7B are detailed circuit diagrams of a scenario 4 of a mobile terminal according to an embodiment of this application. The power adapter is first connected to the second interface, and then the personal computer is connected to the first interface (interface that is conducted by default). In this case, the processor is specifically configured to control the first switch to be open, the second switch to be closed, and the third switch to be open, and control the first end and the third end of the data channel switch to be conducted. In FIG. 7A, a path represented by an arrow with diagonal lines is a charging current path, and a path represented by a black arrow is a data transmission path. Alternatively,

If the personal computer is first connected to the first interface (interface that is conducted by default), and then the power adapter is connected to the second interface, the processor is specifically configured to control the first switch to be closed, and the second switch and the third switch to be open, and control the first end and the third end of the data channel switch to be conducted. In FIG. 7B, a path represented by an arrow with diagonal lines is a charging current path, and a path represented by a black arrow is a data transmission path.

It should be noted that, in a connection manner of the peripheral devices in FIG. 7A and FIG. 7B, when the power adapter is removed, the processor is specifically configured to control the second switch to be open in the case shown in FIG. 7A, and the processor is specifically configured to control the first switch to be open in the case shown in FIG. 7B. When the OTG device is removed, the processor does not need to perform any operation in the case shown in FIG. 7A, and the processor is configured to control the first switch to be open in the case shown in FIG. 7B.

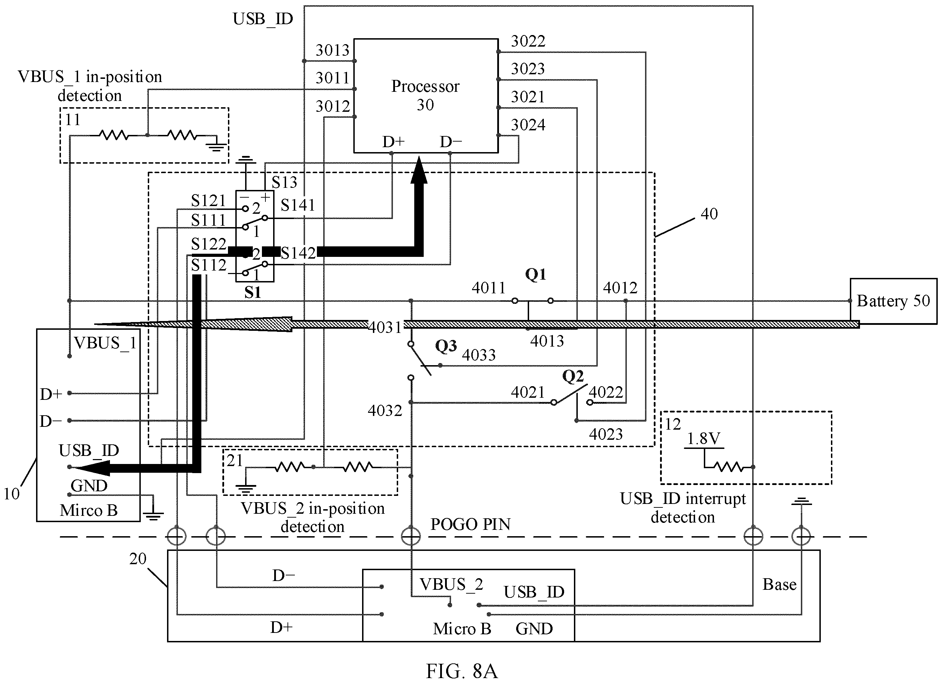

FIG. 8A is a detailed circuit diagram (only a first interface is connected to an OTG device) of a scenario 5 of a mobile terminal according to an embodiment of this application. The OTG device is connected to the first interface. In this case, the processor is specifically configured to control the first switch to be closed, and the second switch and the third switch to be open, and control the first end and the third end of the data channel switch to be conducted. In FIG. 8A, a path represented by an arrow with diagonal lines is a charging current path, and a path represented by a black arrow is a data transmission path.

It should be noted that, in a connection manner of the peripheral device in FIG. 8A, when the OTG device is removed, the processor is configured to control the first switch to be open.

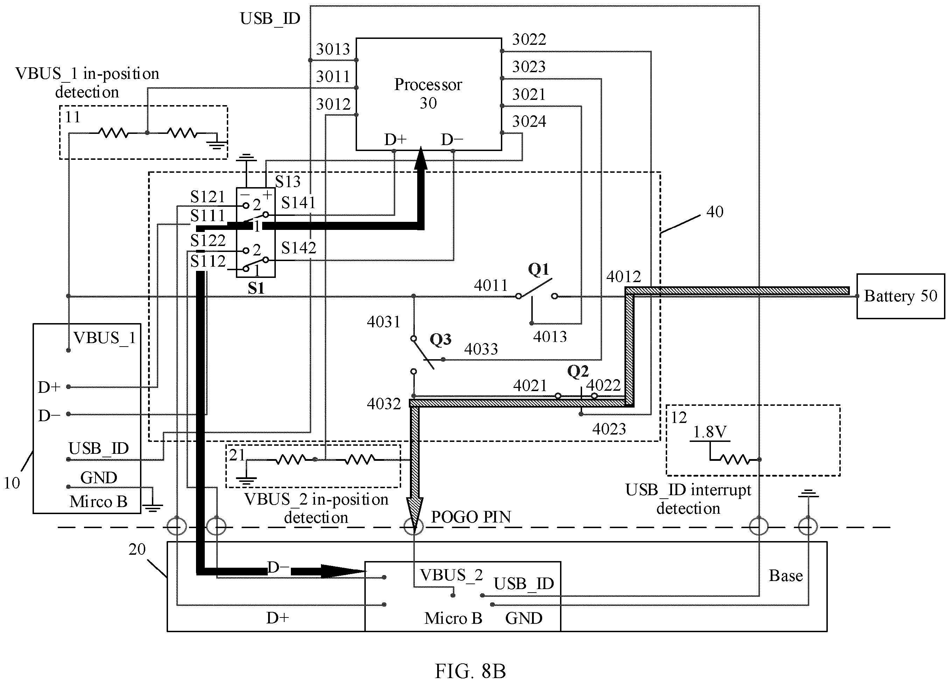

FIG. 8B is another detailed circuit diagram (only a second interface is connected to an OTG device) of the scenario 5 of a mobile terminal according to an embodiment of this application. The OTG device is connected to the second interface. In this case, the processor is specifically configured to control the first switch to be open, the second switch to be closed, and the third switch to be open, and control the second end and the third end of the data channel switch to be conducted. In FIG. 8B, a represented by an arrow with diagonal lines is a charging current path, and a path represented by a black arrow is a data transmission path.

It should be noted that, in a connection manner of the peripheral device in FIG. 8B, when the OTG device is removed, the processor is configured to control the second switch to be open.

Optionally, the mobile terminal further includes a memory, where the memory is configured to store a correspondence between switch statuses of the switch circuit and detection results of the first in-position detection circuit, the second in-position detection circuit, and the data detection circuit. For example, the correspondence may be stored in a form of Table 1. The processor is specifically configured to search for states of the switch circuit based on the correspondence and detection results of the first in-position detection circuit, the second in-position detection circuit, and the data detection circuit, and control, based on the states of the switch circuit that are found, the switch circuit to be open or closed.

**Table 1**

| | Sequence | | 0 | 1 | 2 | ... |
|---|---|---|---|---|---|---|
| Input | VBUS_1 in-position detection | (0=not in-position, 1=in-position) | 0 | 0 | 1 | ... |
| | VBUS_2 in-position detection | (0=not in-position, 1=in-position) | 0 | 0 | 1 | ... |
| | USB_ID in-position detection | (0=in-position, 1=not in-position) | 0 | 1 | 1 | ... |
| Output | Q1 | (0=open, 1=closed) | 0 | 0 | 1 | ... |
| | Q2 | (0=open, 1=closed) | 1 | 1 | 0 | ... |
| | Q3 | (0=open, 1=closed) | 0 | 0 | 0 | ... |

It should be noted that, if two OTG devices are inserted into the first interface and the second interface of the mobile terminal, only one interface can be used to perform data transmission at a time because there is only one data transmission path. To avoid a conflict, a highest priority may be configured for the OTG device inserted first, and the data channel switch S1 is controlled to conduct a data channel between the processor and the interface into which the OTG device is inserted first. Alternatively, data channels between the two interfaces and the processor may be conducted in a time sharing manner, so that data on the two interfaces can be transmitted in the time sharing manner. This is not specifically limited in this embodiment of this application.

If two power adapters are inserted into the first interface and the second interface of the mobile terminal, the two in-position detection circuits both detect that a peripheral device is in position, and the processor configures a highest priority for the power adapter that is inserted first. Certainly, the processor may alternatively configure a highest priority for the power adapter that is inserted later. This is not specifically limited in this embodiment of this application.

If only one interface of the mobile terminal is used, the switch circuit needs to be controlled to set that no current passes through the other interface, so as to ensure safety of the mobile terminal. For example, the peripheral device is inserted into the first interface, and no peripheral device is inserted into the second interface. In this case, the processor controls the first switch to be closed, and the second switch and the third switch to be open, so that no current passes through the VBUS_2 of the second interface. The peripheral device is inserted into the second interface, and no peripheral device is inserted into the first interface. In this case, the processor controls the first switch and the third switch to be open, and the second switch to be closed, so that no current passes through the VBUS_1 of the first interface.

The foregoing descriptions are merely specific implementations of this application, but are not intended to limit the protection scope of this application.

## Claims

1. A mobile terminal, wherein the mobile terminal comprises a first interface (10), a second interface (20), a first in-position detection circuit (11), a second in-position detection circuit (21), a data detection circuit (12), a processor (30), a switch circuit (40), and a battery (50);
the first interface (10) is electrically connected to the first in-position detection circuit (11); the second interface (20) is electrically connected to the second in-position detection circuit (21); the data detection circuit (12) is electrically connected to the first interface (10) and the second interface (20); the first in-position detection circuit (11), the second in-position detection circuit (21), and the data detection circuit (12) are further electrically connected to the processor (30); the processor (30) is further electrically connected to the switch circuit (40); and the switch circuit (40) is further electrically connected to the first interface (10), the second interface (20), and the battery (50);
the first interface (10) and the second interface (20) are configured to connect to a peripheral device;
the first in-position detection circuit (11) and the second in-position detection circuit (21) are configured to detect whether the peripheral device is connected to the mobile terminal;
the data detection circuit (12) is configured to detect whether the peripheral device exchanges data with the mobile terminal;
the processor (30) is configured to control the switch circuit (40) based on detection results of the first in-position detection circuit (11), the second in-position detection circuit (21), and the data detection circuit (12); and
the switch circuit (40) is configured to control the first interface (10) and the second interface (20) to be separately conducted to the battery (50) or the processor (30),
**characterized in that** the switch circuit (40) comprises a first switch (Q1), a second switch (Q2), a third switch (Q3), and a data channel switch (S1);
a first end (4011) of the first switch (Q1) is electrically connected to a power port of the first interface (10), a second end (4012) of the first switch (Q1) is electrically connected to the battery (50), and a control end (4013) of the first switch (Q1) is electrically connected to a first output end of the processor (30);
a first end (4021) of the second switch (Q2) is electrically connected to a power port of the second interface (20), a second end (4022) of the second switch (Q2) is electrically connected to the battery (50), and a control end (4023) of the second switch (Q2) is electrically connected to a second output end of the processor (30);
a first end (4031) of the third switch (Q3) is electrically connected to the power port of the first interface (10), a second end (4032) of the third switch (Q3) is electrically connected to the power port of the second interface (20), and a control end (4033) of the third switch (Q3) is electrically connected to a third output end of the processor (30); and
a control end (S13) of the data channel switch (S1) is electrically connected to a fourth output end (3024) of the processor (30), a first end (S111, S112) of the data channel switch (S1) is electrically connected to a data end of the first interface (10), a second end (S121, S122) of the data channel switch (S1) is electrically connected to a data end of the second interface (20), and a third end (S141, S142) of the data channel switch (S1) is electrically connected to a data port of the processor (30).

2. The mobile terminal according to claim 1, wherein the peripheral device comprises a power adapter or an OTG device; and
if the power adapter is connected to the first interface (10), and the OTG device is connected to the second interface (20), the processor (30) is specifically configured to:
control the first switch (Q1) to be closed, the second switch (Q2) to be open, and the third switch (Q3) to be closed, so that the second end and the third end of the data channel switch (S1) are conducted; or
control the first switch (Q1) to be closed, the second switch (Q2) to be closed, and the third switch (Q3) to be open, so that the second end and the third end of the data channel switch (S1) are conducted.

3. The mobile terminal according to claim 1, wherein the peripheral device comprises a power adapter or an OTG device; and
if the power adapter is connected to the second interface (20), and the OTG device is connected to the first interface (10), the processor (30) is specifically configured to:
control the first switch (Q1) to be closed, the second switch (Q2) to be closed, and the third switch (Q3) to be open, so that the first end and the third end of the data channel switch (S1) are conducted; or
control the first switch (Q1) to be closed, the second switch (Q2) to be open, and the third switch (Q3) to be closed, so that the first end and the third end of the data channel switch (S1) are conducted.

4. The mobile terminal according to claim 1, wherein the peripheral device includes a power adapter or a personal computer; and
if the power adapter is first connected to the first interface (10), and then the personal computer is connected to the second interface (20), the processor (30) is specifically configured to control the first switch (Q1) to be closed, and the second switch (Q2) and the third switch (Q3) to be open; or
if the personal computer is first connected to the second interface (20), and then the power adapter is connected to the first interface (10), the processor is specifically configured to control the first switch (Q1) to be open, the second switch (Q2) to be closed, and the third switch (Q3) to be open.

5. The mobile terminal according to claim 1, wherein the peripheral device includes a power adapter or a personal computer; and
if the power adapter is first connected to the second interface (20), and then the personal computer is connected to the first interface (10), the processor (30) is specifically configured to control the first switch (Q1) to be open, the second switch (Q2) to be closed, and the third switch (Q3) to be open, and control the first end and the third end of the data channel switch (S1) to be conducted; or
if the personal computer is first connected to the first interface (10), and then the power adapter is connected to the second interface (20), the processor (30) is specifically configured to control the first switch (Q1) to be closed, and the second switch (Q2) and the third switch (Q3) to be open, and control the first end and the third end of the data channel switch (S1) to be conducted.

6. The mobile terminal according to claim 1, wherein the mobile terminal further comprises a memory, and the memory is configured to store a correspondence between switch statuses of the switch circuit (40) and detection results of the first in-position detection circuit (11), the second in-position detection circuit (21), and the data detection circuit (12).

7. The mobile terminal according to claim 6, wherein the processor (30) is specifically configured to control the switch statuses of the switch circuit (40) based on the correspondence and the detection results of the first in-position detection circuit (11), the second in-position detection circuit (21), and the data detection circuit (12).

8. The mobile terminal according to any one of claims 1 to 7, wherein the first interface (10) and the second interface (20) comprise a same port.

9. The mobile terminal according to claim 8, wherein the first interface (10) and the second interface (20) comprise a VBUS, a D+, a D-, a USB_ID, and the ground.

10. The mobile terminal according to any one of claims 1 to 9, wherein the first interface (10) or the second interface (20) is a USB micro B interface.

11. The mobile terminal according to any one of claims 1 to 9, wherein the first interface (10) or the second interface (20) is a POGO PIN interface.

12. The mobile terminal according to claim 11, wherein the mobile terminal further comprises a base, wherein the base is connected to the POGO PIN interface and converts the POGO PIN interface into a USB micro B interface.

13. The mobile terminal according to claim 11, wherein the mobile terminal further comprises a base, where the base is connected to the POGO PIN interface and converts the POGO PIN interface into a type A interface.

## Patentansprüche

1. Mobiles Endgerät, wobei das mobile Endgerät eine erste Schnittstelle (10), eine zweite Schnittstelle (20), eine erste In-Position-Erkennungsschaltung (11), eine zweite In-Position-Erkennungsschaltung (21), eine Datenerkennungsschaltung (12), einen Prozessor (30), eine Schalterschaltung (40), und eine Batterie (50) umfasst;
wobei die erste Schnittstelle (10) mit der ersten In-Position-Erkennungsschaltung (11) elektrisch verbunden ist; wobei die zweite Schnittstelle (20) mit der zweiten In-Position-Erkennungsschaltung (21) elektrisch verbunden ist; wobei die Datenerkennungsschaltung (12) mit der ersten Schnittstelle (10) und der zweiten Schnittstelle (20) elektrisch verbunden ist; wobei die erste In-Position-Erkennungsschaltung (11), die zweite In-Position-Erkennungsschaltung (21) und die Datenerkennungsschaltung (12) außerdem mit dem Prozessor (30) elektrisch verbunden sind; wobei der Prozessor (30) außerdem mit der Schalterschaltung (40) elektrisch verbunden ist; und wobei die Schalterschaltung (40) außerdem mit der ersten Schnittstelle (10), der zweiten Schnittstelle (20) und der Batterie (50) elektrisch verbunden ist;
wobei die erste Schnittstelle (10) und die zweite Schnittstelle (20) konfiguriert sind, um mit einer peripheren Vorrichtung verbunden zu werden;
wobei die erste In-Position-Erkennungsschaltung (11) und die zweite In-Position-Erkennungsschaltung (21) konfiguriert sind, um zu erkennen, ob die periphere Vorrichtung mit dem mobilen Endgerät verbunden ist;
wobei die Datenerkennungsschaltung (12) konfiguriert ist, zu erkennen, ob die periphere Vorrichtung Daten mit dem mobilen Endgerät austauscht;
wobei der Prozessor (30) konfiguriert ist, die Schalterschaltung (40) aufgrund von Erkennungsergebnissen der ersten In-Position-Erkennungsschaltung (11), der zweiten In-Position-Erkennungsschaltung (21) und der Datenerkennungsschaltung (12) zu steuern; und
wobei die Schalterschaltung (40) konfiguriert ist, die erste Schnittstelle (10) und die zweite Schnittstelle (20) so zu steuern, dass sie getrennt zu der Batterie (50) oder dem Prozessor (30) leitend sind,
**dadurch gekennzeichnet, dass** die Schalterschaltung (40) einen ersten Schalter (Q1), einen zweiten Schalter (Q2), einen dritten Schalter (Q3) und einen Datenkanalschalter (S1) umfasst;
dass ein erstes Ende (4011) des ersten Schalters (Q1) mit einem Stromversorgungsanschluss der ersten Schnittstelle (10) elektrisch verbunden ist, ein zweites Ende (4012) des ersten Schalters (Q1) mit der Batterie (50) elektrisch verbunden ist, und ein Steuerende (4013) des ersten Schalters (Q1) mit einem ersten Ausgangsende des Prozessors (30) elektrisch verbunden ist;
dass ein erstes Ende (4021) des zweiten Schalters (Q2) mit einem Stromversorgungsanschluss der zweiten Schnittstelle (20) elektrisch verbunden ist, ein zweites Ende (4022) des zweiten Schalters (Q2) mit der Batterie (50) elektrisch verbunden ist, und ein Steuerende (4023) des zweiten Schalters (Q2) mit einem zweiten Ausgangsende des Prozessors (30) elektrisch verbunden ist;
dass ein erstes Ende (4031) des dritten Schalters (Q3) mit einem Stromversorgungsanschluss der ersten Schnittstelle (10) elektrisch verbunden ist, ein zweites Ende (4032) des dritten Schalters (Q3) mit einem Stromversorgungsanschluss der zweiten Schnittstelle (20) elektrisch verbunden ist, und ein Steuerende (4033) des dritten Schalters (Q3) mit einem dritten Ausgangsende des Prozessors (30) elektrisch verbunden ist; und
dass ein Steuerende (S13) des Datenkanalschalters (S1) mit einem vierten Ausgangsende (3024) des Prozessors (30) elektrisch verbunden ist, ein erstes Ende (S111, S112) des Datenkanalschalters (S1) mit einem Datenende der ersten Schnittstelle (10) elektrisch verbunden ist, ein zweites Ende (S121, S122) des Datenkanalschalters (S1) mit einem Datenende der zweiten Schnittstelle (20) elektrisch verbunden ist, und ein drittes Ende (S141, S142) des Datenkanalschalters (S1) mit einem Datenanschluss des Prozessors (30) elektrisch verbunden ist.

2. Mobiles Endgerät nach Anspruch 1, wobei die periphere Vorrichtung einen Stromversorgungsadapter oder eine OTG-Vorrichtung umfasst; und
wobei, wenn der Stromversorgungsadapter mit der ersten Schnittstelle (10) verbunden ist und die OTG-Vorrichtung mit der zweiten Schnittstelle (20) verbunden ist, der Prozessor (30) insbesondere konfiguriert ist:
den ersten Schalter (Q1) so zu steuern, dass er geschlossen ist, den zweiten Schalter (Q2) so zu steuern, dass er geöffnet ist, und den dritten Schalter (Q3) so zu steuern, dass er geschlossen ist, sodass das zweite Ende und das dritte Ende des Datenkanalschalters (S1) leitend sind; oder
den ersten Schalter (Q1) so zu steuern, dass er geschlossen ist, den zweiten Schalter (Q2) so zu steuern, dass er geschlossen ist, und den dritten Schalter (Q3) so zu steuern, dass er geöffnet ist, sodass das zweite Ende und das dritte Ende des Datenkanalschalters (S1) leitend sind.

3. Mobiles Endgerät nach Anspruch 1, wobei die periphere Vorrichtung einen Stromversorgungsadapter oder eine OTG-Vorrichtung umfasst; und
wobei, wenn der Stromversorgungsadapter mit der zweiten Schnittstelle (20) verbunden ist und die OTG-Vorrichtung mit der ersten Schnittstelle (10) verbunden ist, der Prozessor (30) insbesondere konfiguriert ist:
den ersten Schalter (Q1) so zu steuern, dass er geschlossen ist, den zweiten Schalter (Q2) so zu steuern, dass er geschlossen ist, und den dritten Schalter (Q3) so zu steuern, dass er geöffnet ist, sodass das erste Ende und das dritte Ende des Datenkanalschalters (S1) leitend sind; oder
den ersten Schalter (Q1) so zu steuern, dass er geschlossen ist, den zweiten Schalter (Q2) so zu steuern, dass er geöffnet ist, und den dritten Schalter (Q3) so zu steuern, dass er geschlossen ist, sodass das erste Ende und das dritte Ende des Datenkanalschalters (S1) leitend sind.

4. Mobiles Endgerät nach Anspruch 1, wobei die periphere Vorrichtung einen Stromversorgungsadapter oder einen Personal Computer umfasst; und
wobei, wenn der Stromversorgungsadapter zuerst mit der ersten Schnittstelle (10) verbunden wird und der Personal Computer danach mit der zweiten Schnittstelle (20) verbunden wird, der Prozessor (30) insbesondere konfiguriert ist, den ersten Schalter (Q1) so zu steuern, dass er geschlossen ist, und den zweiten Schalter (Q2) und den dritten Schalter (Q3) so zu steuern, dass sie geöffnet sind; oder
wobei, wenn der Personal Computer zuerst mit der zweiten Schnittstelle (20) verbunden wird und der Stromversorgungsadapter danach mit der ersten Schnittstelle (10) verbunden wird, der Prozessor insbesondere konfiguriert ist, den ersten Schalter (Q1) so zu steuern, dass er geöffnet ist, den zweiten Schalter (Q2) so zu steuern, dass er geschlossen ist, und den dritten Schalter (Q3) so zu steuern, dass er geöffnet ist.

5. Mobiles Endgerät nach Anspruch 1, wobei die periphere Vorrichtung einen Stromversorgungsadapter oder einen Personal Computer umfasst; und
wobei, wenn der Stromversorgungsadapter zuerst mit der zweiten Schnittstelle (20) verbunden wird und der Personal Computer danach mit der ersten Schnittstelle (10) verbunden wird, der Prozessor (30) insbesondere konfiguriert ist, den ersten Schalter (Q1) so zu steuern, dass er geöffnet ist, den zweiten Schalter (Q2) so zu steuern, dass er geschlossen ist, und den dritten Schalter (Q3) so zu steuern, dass er geöffnet ist, und das erste Ende und das dritte Ende des Datenkanalschalters (S1) so zu steuern, dass sie leitend sind; oder
wobei, wenn der Personal Computer zuerst mit der ersten Schnittstelle (10) verbunden wird und der Stromversorgungsadapter danach mit der zweiten Schnittstelle (20) verbunden wird, der Prozessor (30) insbesondere konfiguriert ist, den ersten Schalter (Q1) so zu steuern, dass er geschlossen ist, und den zweiten Schalter (Q2) und den dritten Schalter (Q3) so zu steuern, dass sie geöffnet sind, und das erste Ende und das dritte Ende des Datenkanalschalters (S1) so zu steuern, dass sie leitend sind.

6. Mobiles Endgerät nach Anspruch 1, wobei das mobile Endgerät außerdem einen Speicher umfasst und wobei der Speicher konfiguriert ist, eine Entsprechung zwischen den Schalterzuständen der Schalterschaltung (40) und den Erkennungsergebnissen der ersten In-Position-Erkennungsschaltung (11), der zweiten In-Position-Erkennungsschaltung (21) und der Datenerkennungsschaltung (12) zu speichern.

7. Mobiles Endgerät nach Anspruch 6, wobei der Prozessor (30) insbesondere konfiguriert ist, die Schalterzustände der Schalterschaltung (40) aufgrund der Entsprechung und aufgrund der Erkennungsergebnisse der ersten In-Position-Erkennungsschaltung (11), der zweiten In-Position-Erkennungsschaltung (21) und der Datenerkennungsschaltung (12) zu steuern.

8. Mobiles Endgerät nach einem der Ansprüche 1 bis 7, wobei die erste Schnittstelle (10) und die zweite Schnittstelle (20) einen gleichen Anschluss umfassen.

9. Mobiles Endgerät nach Anspruch 8, wobei die erste Schnittstelle (10) und die zweite Schnittstelle (20) einen VBUS, eine D+, eine D-, eine USB_ID und die Erdung umfassen.

10. Mobiles Endgerät nach einem der Ansprüche 1 bis 9, wobei die erste Schnittstelle (10) oder die zweite Schnittstelle (20) eine USB-Mikro-B-Schnittstelle ist.

11. Mobiles Endgerät nach einem der Ansprüche 1 bis 9, wobei die erste Schnittstelle (10) oder die zweite Schnittstelle (20) eine POGO-PIN-Schnittstelle ist.

12. Mobiles Endgerät nach Anspruch 11, wobei das mobile Endgerät außerdem eine Basis umfasst, wobei die Basis mit der POGO-PIN-Schnittstelle verbunden ist und die POGO-PIN-Schnittstelle in eine USB-Mikro-B-Schnittstelle umwandelt.

13. Mobiles Endgerät nach Anspruch 11, wobei das mobile Endgerät außerdem eine Basis umfasst, wobei die Basis mit der POGO-PIN-Schnittstelle verbunden ist und die POGO-PIN-Schnittstelle in eine Typ-A-Schnittstelle umwandelt.

## Revendications

1. Terminal mobile, où le terminal mobile comprend une première interface (10), une seconde interface (20), un premier circuit de détection de position (11), un second circuit de détection de position (21), un circuit de détection de données (12), un processeur (30), un circuit de commutation (40) et une batterie (50) ;
la première interface (10) est connectée électriquement au premier circuit de détection de position (11) ; la seconde interface (20) est connectée électriquement au second circuit de détection de position (21) ; le circuit de détection de données (12) est connecté électriquement à la première interface (10) et à la seconde interface (20) ; le premier circuit de détection de position (11), le second circuit de détection de position (21) et le circuit de détection de données (12) sont en outre connectés électriquement au processeur (30) ; le processeur (30) est en outre connecté électriquement au circuit de commutation (40) ; et le circuit de commutation (40) est en outre connecté électriquement à la première interface (10), à la seconde interface (20) et à la batterie (50) ;
la première interface (10) et la seconde interface (20) sont configurées pour se connecter à un dispositif périphérique ;
le premier circuit de détection de position (11) et le second circuit de détection de position (21) sont configurés pour détecter si le dispositif périphérique est connecté ou non au terminal mobile ;
le circuit de détection de données (12) est configuré pour détecter si le dispositif périphérique échange ou non des données avec le terminal mobile ;
le processeur (30) est configuré pour commander le circuit de commutation (40) sur la base des résultats de détection du premier circuit de détection de position (11), du second circuit de détection de position (21), et du circuit de détection de données (12) ; et
le circuit de commutation (40) est configuré pour commander la première interface (10) et la seconde interface (20) pour qu'elles soient pilotées séparément vers la batterie (50) ou le processeur (30),
**caractérisé en ce que** le circuit de commutation (40) comprend un premier commutateur (Q1), un deuxième commutateur (Q2), un troisième commutateur (Q3), et un commutateur de canal de données (S1) ;
une première extrémité (4011) du premier commutateur (Q1) est connectée électriquement à un port d'alimentation de la première interface (10), une deuxième extrémité (4012) du premier commutateur (Q1) est connectée électriquement à la batterie (50) et une extrémité de commande (4013) du premier commutateur (Q1) est connectée électriquement à une première extrémité de sortie du processeur (30) ;
une première extrémité (4021) du deuxième commutateur (Q2) est connectée électriquement à un port d'alimentation de la seconde interface (20), une deuxième extrémité (4022) du deuxième commutateur (Q2) est connectée électriquement à la batterie (50), et une extrémité de commande (4023) du deuxième commutateur (Q2) est connectée électriquement à une deuxième extrémité de sortie du processeur (30) ; une première extrémité (4031) du troisième commutateur (Q3) est connectée électriquement au port d'alimentation de la première interface (10), une deuxième extrémité (4032) du troisième commutateur (Q3) est connectée électriquement au port d'alimentation de la seconde interface (20) et une extrémité de commande (4033) du troisième commutateur (Q3) est connectée électriquement à une troisième extrémité de sortie du processeur (30) ; et
une extrémité de commande (S13) du commutateur de canal de données (S1) est connectée électriquement à une quatrième extrémité de sortie (3024) du processeur (30), une première extrémité (S111, S112) du commutateur de canal de données (S1) est connectée électriquement à une extrémité de données de la première interface (10), une deuxième extrémité (S121, S122) du commutateur de canal de données (S1) est connectée électriquement à une extrémité de données de la seconde interface (20), et une troisième extrémité (S141, S142) du commutateur de canal de données (S1) est connectée électriquement à un port de données du processeur (30).

2. Terminal mobile selon la revendication 1, dans lequel le dispositif périphérique comprend un adaptateur d'alimentation ou un dispositif OTG ; et
si l'adaptateur d'alimentation est connecté à la première interface (10) et le dispositif OTG est connecté à la seconde interface (20), le processeur (30) est spécifiquement configuré pour :
commander le premier commutateur (Q1) pour qu'il soit fermé, le deuxième commutateur (Q2) pour qu'il soit ouvert et le troisième commutateur (Q3) pour qu'il soit fermé, de sorte que la deuxième extrémité et la troisième extrémité du commutateur de canal de données (S1) soient pilotées ; ou
commander le premier commutateur (Q1) pour qu'il soit fermé, le deuxième commutateur (Q2) pour qu'il soit fermé et le troisième commutateur (Q3) pour qu'il soit ouvert, de sorte que la deuxième extrémité et la troisième extrémité du commutateur de canal de données (S1) soient pilotées.

3. Terminal mobile selon la revendication 1, dans lequel le dispositif périphérique comprend un adaptateur d'alimentation ou un dispositif OTG ; et
si l'adaptateur d'alimentation est connecté à la seconde interface (20) et le dispositif OTG est connecté à la première interface (10), le processeur (30) est spécifiquement configuré pour :
commander le premier commutateur (Q1) pour qu'il soit fermé, le deuxième commutateur (Q2) pour qu'il soit fermé et le troisième commutateur (Q3) pour qu'il soit ouvert, de sorte que la première extrémité et la troisième extrémité du commutateur de canal de données (S1) soient pilotées ; ou
commander le premier commutateur (Q1) pour qu'il soit fermé, le deuxième commutateur (Q2) pour qu'il soit ouvert et le troisième commutateur (Q3) pour qu'il soit fermé, de sorte que la première extrémité et la troisième extrémité du commutateur de canal de données (S1) soient pilotées.

4. Terminal mobile selon la revendication 1, dans lequel le dispositif périphérique comprend un adaptateur d'alimentation ou un ordinateur personnel ; et
si l'adaptateur d'alimentation est d'abord connecté à la première interface (10), et qu'ensuite l'ordinateur personnel est connecté à la seconde interface (20), le processeur (30) est spécifiquement configuré pour commander le premier commutateur (Q1) pour qu'il soit fermé et le deuxième commutateur (Q2) et le troisième commutateur (Q3) pour qu'ils soient ouverts ; ou
si l'ordinateur personnel est d'abord connecté à la seconde interface (20), et qu'ensuite l'adaptateur d'alimentation est connecté à la première interface (10), le processeur est spécifiquement configuré pour commander le premier commutateur (Q1) pour qu'il soit ouvert, le deuxième commutateur (Q2) pour qu'il soit fermé et le troisième commutateur (Q3) pour qu'il soit ouvert.

5. Terminal mobile selon la revendication 1, dans lequel le dispositif périphérique comprend un adaptateur d'alimentation ou un ordinateur personnel ; et
si l'adaptateur d'alimentation est d'abord connecté à la seconde interface (20), et qu'ensuite l'ordinateur personnel est connecté à la première interface (10), le processeur (30) est spécifiquement configuré pour commander le premier commutateur (Q1) pour qu'il soit ouvert, le deuxième commutateur (Q2) pour qu'il soit fermé et le troisième commutateur (Q3) pour qu'il soit ouvert, et commander la première extrémité et la troisième extrémité du commutateur de canal de données (S1) pour qu'elles soient pilotées ; ou
si l'ordinateur personnel est d'abord connecté à la première interface (10), et qu'ensuite l'adaptateur d'alimentation est connecté à la seconde interface (20), le processeur (30) est spécifiquement configuré pour commander le premier commutateur (Q1) pour qu'il soit fermé, et le deuxième commutateur (Q2) et le troisième commutateur (Q3) pour qu'ils soient ouverts, et commander la première extrémité et la troisième extrémité du commutateur de canal de données (S1) pour qu'elles soient pilotées.

6. Terminal mobile selon la revendication 1, où le terminal mobile comprend en outre une mémoire, et la mémoire est configurée pour stocker une correspondance entre les états de commutation du circuit de commutation (40) et les résultats de détection du premier circuit de détection de position (11), du second circuit de détection de position (21) et du circuit de détection de données (12).

7. Terminal mobile selon la revendication 6, dans lequel le processeur (30) est spécifiquement configuré pour commander les états de commutation du circuit de commutation (40) sur la base de la correspondance et des résultats de détection du premier circuit de détection de position (11), du second circuit de détection de position (21) et du circuit de détection de données (12).

8. Terminal mobile selon l'une quelconque des revendications 1 à 7, dans lequel la première interface (10) et la seconde interface (20) comprennent un même port.

9. Terminal mobile selon la revendication 8, dans lequel la première interface (10) et la seconde interface (20) comprennent un VBUS, un D+, un D-, un USB_ID et la masse.

10. Terminal mobile selon l'une quelconque des revendications 1 à 9, dans lequel la première interface (10) ou la seconde interface (20) est une interface USB micro B.

11. Terminal mobile selon l'une quelconque des revendications 1 à 9, dans lequel la première interface (10) ou la seconde interface (20) est une interface POGO PIN.

12. Terminal mobile selon la revendication 11, où le terminal mobile comprend en outre une base, où la base est connectée à l'interface POGO PIN et convertit l'interface POGO PIN en une interface USB micro B.

13. Terminal mobile selon la revendication 11, où le terminal mobile comprend en outre une base, où la base est connectée à l'interface POGO PIN et convertit l'interface POGO PIN en une interface de type A.
